# FASCICULE DE BREVET EUROPEEN

(11) **EP 2 475 549 B1**
(45) Date de publication et mention de la délivrance du brevet: **01.05.2013**
(21) Numéro de dépôt: 10763780.3
(22) Date de dépôt: 31.08.2010
(51) Int. Cl.: B60N 2/30

(54) **SYSTEME DE SUPPORT DE PERSONNE(S) A DEPLACEMENT VERTICAL, POUR UN VÉHICULE**
SENKRECHT BEWEGBARES PASSAGIER-STÜTZSYSTEM FÜR EIN FAHRZEUG
VERTICALLY MOVABLE PERSONAL SUPPORT SYSTEM FOR A VEHICLE

(30) Priorité: 09.09.2009 FR 0956146
(43) Date de publication de la demande: 18.07.2012
(73) Titulaire: Peugeot Citroën Automobiles SA, 78140 Vélizy Villacoublay (FR)
(72) Inventeur: REBEL, Vincent, F-75010 Paris (FR)
(86) Numéro de dépôt international: PCT/FR2010/051806
(87) Numéro de publication internationale: WO 2011/030039

(56) Documents cités:
- EP-A2- 1 681 198
- FR-A1- 2 668 990
- FR-A1- 2 725 669
- FR-A1- 2 812 591
- US-A- 6 152 401

## Description

L'invention concerne les équipements des habitacles de véhicule, éventuellement de type automobile, et plus précisément certains systèmes de support de passager(s) qui équipent certains habitacles de véhicule.

Comme le sait l'homme de l'art, de nombreuses solutions ont déjà été proposées pour permettre une modularité de l'espace de chargement de certains véhicules, notamment de type automobile. Un bon nombre de ces solutions consiste à utiliser des sièges amovibles ou bien des sièges rabattables ou escamotables.

Afin qu'un véhicule équipé de sièges rabattables ou escamotables puisse effectivement emporter des charges de grande longueur, il faut que ces sièges puissent être intégralement logés dans des logements dédiés du plancher du véhicule ou dans des renfoncements définis dans son plancher, comme cela est notamment proposé dans les documents brevet FR 2668990 et FR 2725669. On comprendra que cette dernière solution n'est envisageable qu'à condition que le plancher comprenne une partie dédiée au support de siège(s) qui est située à un niveau qui est inférieur au niveau de sa partie dédiée au chargement. C'est notamment le cas de certains véhicules utilitaires tels que les fourgonnettes de type dit F1 (par exemple le Berlingo® ou le Partner®).

Il est connu également des documents EP1681198 A2 correspondant au préambule de la revendication indépendante et US6152401 des cinématiques de sièges rabattables ou escamotables.

L'invention a donc pour but de permettre le chargement d'objets de grande longueur dans des véhicules ayant un plancher dont la partie dédiée au support de siège(s) est située à un niveau supérieur ou égal à celui de sa partie dédiée au chargement (comme c'est notamment le cas des véhicules utilitaires, tels que les fourgons de taille moyenne (de type dit K1 (tels que le Jumpy®)) et les fourgons de grosse taille (de type K2 (tels que le Boxer®) ou K3 (tels que l'Iveco DAILY®, ou le Mercedes SPRINTER®)).

Elle propose à cet effet un véhicule conforme à l'objet de la revendication 1.

Le système de support selon l'invention peut comporter d'autres caractéristiques et notamment :
- le déplacement peut se faire par translation rectiligne (par exemple au moyen de glissières), par translation curviligne (par exemple au moyen de biellettes), et d'une manière générale par tout type de coulissement ;
- il peut comprendre une structure destinée à être solidarisée fixement au véhicule derrière la face arrière du dossier de chaque siège et sur laquelle est monté fixement chaque premier moyen de déplacement ;
   ➢ cette structure peut par exemple comprendre une paroi (pleine ou grillagée) et/ou des tubes ;
      - la structure peut être destinée à être solidarisée fixement à des montants de la structure du véhicule ;
         o la structure peut être destinée à être solidarisée fixement à des montants latéraux opposés de la structure du véhicule ;
      - la structure peut être destinée à être solidarisée fixement au toit (ou pavillon) du véhicule ;
      - la structure peut être destinée à s'étendre sur la hauteur d'une partie supérieure de l'habitacle ;
- chaque assise peut être montée à rotation par rapport au dossier associé et rabattable contre une face avant du dossier ;
- chaque siège peut comprendre des pieds rabattables qui sont solidarisés à une face inférieure de son assise ;
- il peut comprendre des moyens d'entraînement agencés pour faciliter le déplacement d'un siège par rapport à chaque premier moyen de déplacement associé ;
   ➢ les moyens d'entraînement peuvent comprendre au moins un élément choisi parmi (au moins) un vérin, un mécanisme à contrepoids et un ressort de rappel ;
   ➢ dans une variante, les moyens d'entraînement peuvent comprendre un moteur électrique propre à faire coulisser sur ordre le siège.

De préférence, la zone de chargement définie sous le siège (SI) s'étend également derrière le siège (SI). Il y a donc un passage sous l'assise (AS) permettant d'aller librement de devant le dossier (DS) à derrière le dossier (DS).

De préférence, le déplacement dudit dossier (DS) et donc dudit siège (SI) de bas en haut est effectué par translation curviligne.

De préférence, le déplacement dudit dossier (DS) et donc dudit siège (SI) de bas en haut est effectué à l'aide de deux biellettes, l'une rattachée au haut de dossier (DS) et l'autre rattachée au bas de dossier (DS). L'une des biellettes est rattachée par une de ses extrémités au haut de dossier tandis qu'elle est rattachée à la structure du véhicule par l'autre de ses extrémités. L'autre biellette est rattachée par une de ses extrémités au bas de dossier tandis qu'elle est rattachée à la structure du véhicule par l'autre de ses extrémités. L'escamotage du dossier de siège à l'aide de deux biellettes est une façon particulièrement simple et robuste de réaliser cet escamotage.

Un tel véhicule peut être par exemple de type automobile et utilitaire.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en coupe suivant un plan contenant des directions longitudinale (X) et verticale (Z), un exemple de réalisation de système de support selon l'invention implanté dans une partie avant d'un habitacle de véhicule automobile, dans une position de support de passager(s),
- la figure 2 illustre schématiquement et fonctionnellement, dans une vue en coupe suivant le plan contenant les directions longitudinale (X) et verticale (Z), le système de support de la figure 1 dans une position de chargement, et
- la figure 3 illustre schématiquement et fonctionnellement, dans une vue en coupe suivant le plan contenant les directions longitudinale (X) et verticale (Z), une variante du système de support de la figure 1 dans une position de chargement.

Les dessins annexés pourront non seulement servir à compléter l'invention, mais aussi contribuer à sa définition, le cas échéant.

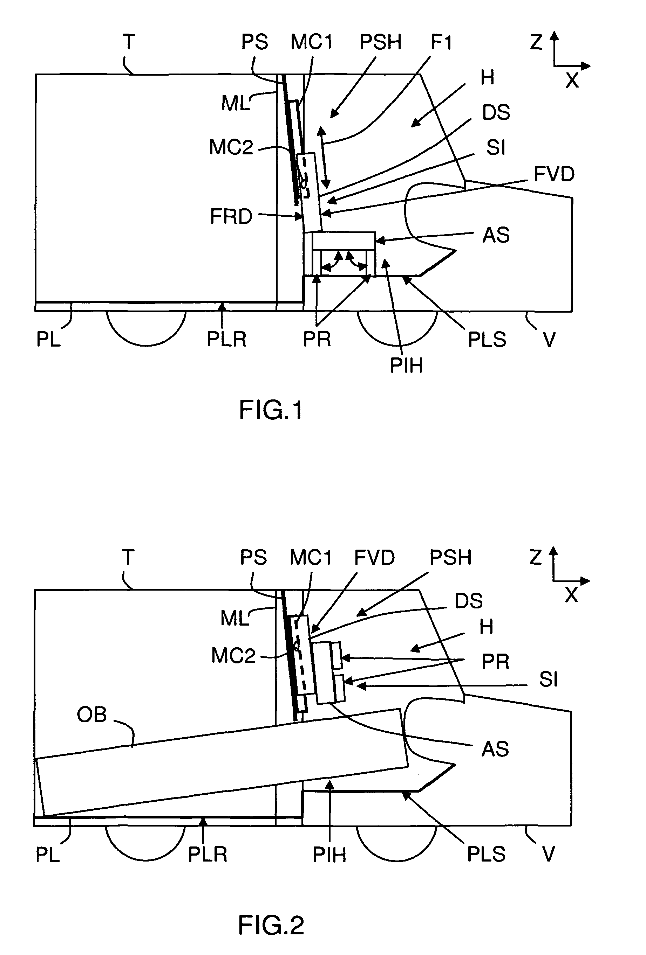

On a schématiquement et fonctionnellement représenté sur les figures 1 à 3 un exemple de véhicule V équipé d'un système de support SS selon l'invention.

Sur les figures, la direction X est la direction longitudinale du véhicule V, laquelle est sensiblement parallèle aux côtés comportant les portières latérales, et la direction Z est la direction verticale du véhicule V, laquelle est sensiblement perpendiculaire au plancher PL.

On considère dans ce qui suit, à titre d'exemple non limitatif, que le véhicule est de type automobile et utilitaire, comme par exemple un fourgon. Mais, l'invention n'est pas limitée à ce type de véhicule. Elle concerne en effet tout type de véhicule ayant un plancher PL dont la partie PLS dédiée au support de siège(s) SI est située à un niveau qui est supérieur ou égal à celui de sa partie PLR qui est dédiée au chargement.

Par ailleurs, on considère dans ce qui suit, à titre d'exemple non limitatif, que la partie PLS dédiée au support de siège(s) SI est située à un niveau qui est supérieur à celui de la partie PLR qui est dédiée au chargement.

Il résulte du choix illustratif précité que le système de support SS est ici implanté dans la partie avant de l'habitacle H du véhicule, sur la partie avant PLS du plancher PL qui est dédiée au support des sièges avant SI et qui est ici située à un niveau supérieur à celui de sa partie arrière PLR qui est dédiée au chargement d'objet(s) OB. Mais, l'invention n'est pas limitée à cet exemple. En effet, un système de support SS selon l'invention peut être implanté en n'importe quel rang d'un véhicule du type précité.

Comme illustré sur les figures 1 à 3, un système de support SS, selon l'invention, comprend au moins un siège SI, au moins un premier moyen de déplacement MC1 et au moins un second moyen de déplacement MC2.

On considère dans ce qui suit, à titre d'exemple non limitatif, que le système (de support) SS ne comprend qu'un seul siège SI (monoplace ou banquette à au moins deux places), et donc qu'au moins un premier moyen de déplacement MC1 et qu'au moins un second moyen de déplacement MC2 associée. Mais, le système (de support) SS pourrait comprendre plusieurs sièges monoplace indépendants et donc plusieurs premiers moyens de déplacement MC1 et plusieurs seconds moyens de déplacement MC2 associés respectivement à chacun desdits sièges SI.

Le siège SI comporte une assise AS qui est solidarisée à un dossier DS.

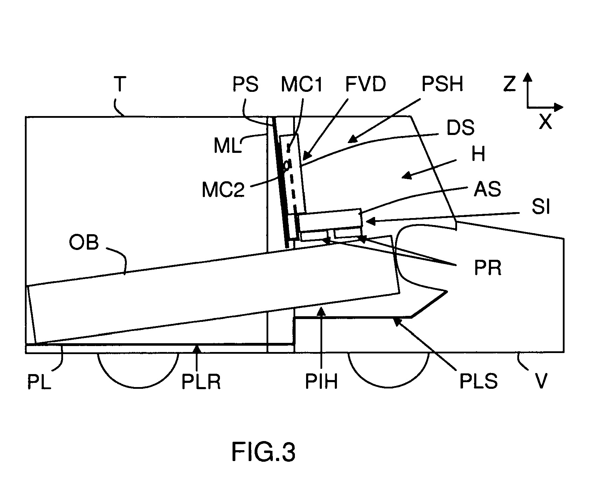

L'assise AS est munie, sur une face inférieure (orientée vers le plancher PL) de pieds PR qui sont agencés de manière à pouvoir être solidarisés de façon amovible à la partie avant PLS du plancher PL du véhicule V, par exemple grâce à des moyens de verrouillage (non représentés). On notera que ces pieds PR sont de préférence rabattables contre la face inférieure de l'assise AS, comme illustré non limitativement sur les figures 2 et 3.

Par ailleurs, l'assise AS peut être montée à rotation sur une partie inférieure du dossier DS de manière à pouvoir être rabattue contre la face avant FVD du dossier DS (orientée vers l'avant du véhicule V), comme c'est le cas dans l'exemple de réalisation qui est illustré sur la figure 2. Ce montage à rotation peut par exemple être assuré par un mécanisme articulé.

Chaque premier moyen de déplacement MC1 associé au siège SI est destiné à être solidarisé au véhicule V sensiblement parallèlement l'un à l'autre et suivant une inclinaison choisie par rapport à la direction verticale Z du véhicule V. On notera que chaque siège SI peut être associé à deux premiers moyens de déplacement MC1 sensiblement parallèle l'un à l'autre et donc deux seconds moyens de déplacement MC2 correspondants et sensiblement parallèles l'un à l'autre.

L'inclinaison correspond sensiblement à l'inclinaison moyenne d'un dossier DS d'un siège SI de passager. Elle est donc de préférence comprise entre environ 15 ° et environ 25 °.

Chaque premier moyen de déplacement MC1 peut par exemple être une glissière ou une coulisse munie d'une rainure centrale ou encore un rail muni d'au moins une nervure éventuellement centrale.

Comme illustré non limitativement sur les figures 1 à 3, chaque premier moyen de déplacement MC1 peut être solidarisé fixement à une éventuelle structure PS du système SS. Cette structure PS, éventuellement de protection, est destinée à être solidarisée fixement dans l'habitacle H du véhicule V derrière la face arrière FAD du dossier DS (qui est opposée à la face avant FVD) de chaque siège SI. On notera que la face arrière FAD d'un dossier DS est celle qui est orientée vers l'arrière du véhicule et donc qui est opposée à sa face avant FVD.

Cette structure PS peut par exemple être solidarisée fixement à des montants ML de la structure du véhicule V, et par exemple aux montants latéraux opposés ML (également appelés pieds milieux), et/ou au toit (ou pavillon) T du véhicule V (par exemple sur au moins une membrure). Mais, elle pourrait également être solidarisée fixement à un montant latéral ML et un montant central de la structure du véhicule V, ainsi qu'éventuellement au toit T.

Comme illustré non limitativement sur les figures 1 à 3, la structure PS peut ne s'étendre que sur la hauteur d'une partie supérieure PSH de l'habitacle H. On notera que la partie supérieure PSH est délimitée en haut par le toit T par opposition à la partie inférieure PIH de l'habitacle H qui est complémentaire de la partie supérieure PSH et délimitée en bas par le plancher PL. La structure PS est alors en quelque sorte suspendue au dessus du plancher PL à une distance choisie de celui-ci de manière à permettre le passage d'une partie d'un objet long OB dans une zone de chargement (avant) située sous le siège SI, lorsque ce dernier SI est remonté (ou surélevé), comme illustré sur les figures 2 et 3 et comme on le comprendra plus loin.

On notera que la structure PS peut par exemple comprendre une paroi, pleine ou grillagée, et/ou des tubes (ou tubulures), l'important étant qu'elle puisse permettre la solidarisation d'au moins un premier moyen de déplacement MC1.

Chaque second moyen de déplacement MC2 associé à un siège SI est destiné à être solidarisé fixement au dossier DS, par exemple sur sa face arrière FRD.

Chaque second moyen de déplacement MC2 est agencé (ou conçu) de manière à permettre le déplacement de son dossier DS par rapport au premier moyen de déplacement MC1 associé. Par exemple, lorsqu'un premier moyen de déplacement MC1 est une coulisse ou une glissière munie d'une rainure centrale, le second moyen de déplacement MC2 associé peut se présenter sous la forme d'un plot dont l'extrémité libre est agencée de manière à coulisser dans la rainure centrale. En revanche, lorsqu'un premier moyen de déplacement MC1 est un rail muni d'une nervure centrale, le second moyen de déplacement MC2 associé peut se présenter sous la forme d'une petite glissière ou coulisse munie d'une rainure centrale dans laquelle peut coulisser la nervure centrale.

On notera que les premier(s) MC1 et second(s) MC2 moyens de déplacement peuvent se présenter sous d'autres formes que celles mentionnées ci-avant, dès lors qu'ils permettent un déplacement du siège de bas en haut et réciproquement. Ainsi, ils peuvent assurer un déplacement de type translation rectiligne (par exemple au moyen de glissières ou de bagues montées sur des tubes - on parle alors de moyens de coulissement), ou de type translation curviligne (par exemple au moyen de biellettes), ou de tout autre type de coulissement.

On comprendra que grâce à la coopération d'un (ou deux) premier(s) moyen(s) de déplacement MC1 avec un (ou deux) second(s) moyens de déplacement MC2, le siège SI peut être déplacé de bas en haut (flèche F1 de la figure 1) à l'intérieur de l'habitacle H du véhicule V afin d'être placé dans une position surélevée (ou remontée) et ainsi permettre la définition sous lui (SI) de la zone de chargement (avant). Bien entendu, lorsque le siège SI est placé dans sa position remontée (ou surélevée), il peut être redescendu par un déplacement inverse (de haut en bas) afin d'être placé dans sa position de support de passager(s) illustrée sur la figure 1.

On entend ici par « zone de chargement (avant) », la zone qui est située au dessus de la partie avant de support PLS du plancher PL et sensiblement sous le niveau des sièges SI.

Lorsque l'on veut transporter un objet long OB dans le véhicule V, on doit déverrouiller les pieds PR, puis les replier contre la face inférieure de l'assise AS (s'ils sont repliables). Ensuite, si l'assise AS est montée à rotation par rapport au dossier DS associé et donc rabattable, comme illustré sur la figure 2, on rabat cette assise AS contre la face avant FVD du dossier DS, puis on déplace le siège SI replié vers le haut (par exemple par coulissement), de préférence jusqu'à ce qu'il parvienne dans une position de verrouillage dans laquelle il peut être immobilisé temporairement. Il est alors possible de faire passer une extrémité d'un objet long OB sous le siège SI remonté afin de la loger dans la zone de chargement avant.

Si l'assise AS n'est pas montée à rotation par rapport au dossier DS associé, comme illustré sur la figure 3, on déplace directement le siège SI (non replié) vers le haut (par exemple par coulissement), de préférence jusqu'à ce qu'il parvienne dans une position de verrouillage dans laquelle il peut être immobilisé temporairement. Il est alors possible de faire passer une extrémité d'un objet long OB sous le siège SI remonté afin de la loger dans la zone de chargement avant.

Lorsque l'objet long a été retiré du véhicule V et que l'on veut replacer le siège SI dans une position adaptée au support d'au moins un passager, on peut effectuer les opérations inverses de celles décrites ci-avant. On déplace le siège SI vers le bas jusqu'à ce que son dossier DS parvienne au niveau d'une butée inférieure. Puis, on rabat alors éventuellement l'assise AS (si elle était redressée), puis on rabat éventuellement les pieds PR (si ils étaient redressés), et on verrouille les pieds PR par rapport à la partie avant de support PLS du plancher PL.

On notera, bien que cela ne soit pas illustré, que le système SS peut également et éventuellement comprendre des moyens d'entraînement agencés (ou conçus) pour faciliter le déplacement d'un siège SI par rapport au(x) premier(s) moyen(s) de déplacement MC1 qui lui est (sont) associé(s).

Pour ce faire, on peut envisager tout moyen connu de l'homme de l'art, et notamment au moins un élément de type mécanique comme par exemple (et non limitativement) un vérin ou un mécanisme à contrepoids ou encore un ressort de rappel.

Dans une variante, les moyens d'entraînement peuvent par exemple comprendre un moteur électrique chargé de déplacer sur ordre le siège SI associé.

## Revendications

1. Véhicule (V), **caractérisé en ce qu'**il comprend au moins un système de support (SS) pour un habitacle (H) de véhicule (V), ledit système (SS) comprenant au moins un siège (SI) comportant une assise (AS) solidarisée à un dossier (DS), et comprenant en outre i) au moins un premier moyen de déplacement (MC1) destiné à être solidarisé audit véhicule (V) suivant une inclinaison choisie par rapport à une direction verticale dudit véhicule (V), et ii) au moins un second moyen de déplacement (MC2) solidarisé fixement audit dossier (DS) et agencé pour se déplacer par rapport audit premier moyen de déplacement (MC1) de manière à permettre le déplacement dudit dossier (DS) et donc dudit siège (SI) de bas en haut à l'intérieur dudit véhicule (V) pour définir sous lui (SI) une zone de chargement, et **en ce que** le véhicule comprend un plancher (PL) comprenant une partie avant (PLS), dédiée au support de siège(s) (SI) et au niveau de laquelle est implanté ledit système de support (SS), et une partie arrière (PLR) dédiée au chargement et située à un niveau inférieur ou égal au niveau de ladite partie avant de support (PLS).

2. Véhicule selon la revendication 1, **caractérisé en ce que** le système de support comprend une structure (PS) destinée à être solidarisée fixement audit véhicule (V) derrière une face arrière (FAD) du dossier (DS) de chaque siège (SI) et sur laquelle est monté fixement chaque premier moyen de déplacement (MC1).

3. Véhicule selon la revendication 2, **caractérisé en ce que** ladite structure (PS) comprend une paroi.

4. Véhicule selon l'une des revendications 2 et 3, **caractérisé en ce que** ladite structure (PS) comprend des tubes.

5. Véhicule selon l'une des revendications 2 à 4, **caractérisé en ce que** ladite structure (PS) est destinée à être solidarisée fixement à des montants (ML) de la structure dudit véhicule (V).

6. Véhicule selon la revendication 5, **caractérisé en ce que** ladite structure (PS) est destinée à être solidarisée fixement à des montants latéraux opposés (ML) de la structure dudit véhicule (V).

7. Véhicule selon l'une des revendications 2 à 6, **caractérisé en ce que** ladite structure (PS) est destinée à être solidarisée fixement au toit (T) dudit véhicule (V).

8. Véhicule selon l'une des revendications 2 à 7, **caractérisé en ce que** ladite structure (PS) est destinée à s'étendre sur la hauteur d'une partie supérieure (PSH) dudit habitacle (H).

9. Véhicule selon l'une des revendications 1 à 8, **caractérisé en ce que** chaque assise (AS) est montée à rotation par rapport au dossier (DS) associé et rabattable contre une face avant (FVD) dudit dossier (DS).

10. Véhicule selon l'une des revendications 1 à 9, **caractérisé en ce que** chaque siège (SI) comprend des pieds rabattables (PR) solidarisés à une face inférieure de son assise (AS).

11. Véhicule selon l'une des revendications 1 à 10, **caractérisé en ce qu'**il comprend des moyens d'entraînement agencés pour faciliter le déplacement d'un siège (SI) par rapport au(x) premier(s) moyen(s) de déplacement (MC1) associé(s).

12. Véhicule selon la revendication 11, **caractérisé en ce que** lesdits moyens d'entraînement comprennent au moins un élément choisi dans un groupe comprenant au moins un vérin, un mécanisme à contrepoids et un ressort de rappel.

13. Véhicule selon la revendication 11, **caractérisé en ce que** lesdits moyens d'entraînement comprennent un moteur électrique propre à faire coulisser sur ordre ledit siège (SI).

14. Véhicule selon l'une des revendications précédentes, **caractérisé en ce que** la zone de chargement définie sous le siège (SI) s'étend également derrière le siège (SI).

15. Véhicule selon l'une des revendications précédentes, **caractérisé en ce que** le déplacement dudit dossier (DS) et donc dudit siège (SI) de bas en haut est effectué par translation curviligne.

16. Véhicule selon la revendication précédente, **caractérisé en ce que** le déplacement dudit dossier (DS) et donc dudit siège (SI) de bas en haut est effectué à l'aide de deux biellettes, l'une rattachée au haut de dossier (DS) et l'autre rattachée au bas de dossier (DS).

17. Véhicule selon l'une des revendications précédentes, **caractérisé en ce qu'**il constitue un véhicule automobile de type utilitaire.

## Claims

1. A vehicle (V), **characterized in that** it includes at least one support system (SS) for a passenger compartment (H) of a vehicle (V), the said system (SS) including at least one seat (SI) including a seat pan (AS) secured to a backrest (DS), and further including i) at least one first displacement means (MC1) intended to be secured to the said vehicle (V) at a selected inclination with respect to a vertical direction of the said vehicle (V), and ii) at least one second displacement means (MC2) fixedly secured to the said backrest (DS) and arranged to move with respect to the said first displacement means (MC1) so as to permit the displacement of the said backrest (DS) and hence of the said seat (SI) upward inside the said vehicle (V) to define beneath it (SI) a loading area, and **in that** the vehicle includes a floor (PL) including a front part (PLS), dedicated to the support of the seat(s) (SI) and at the level of which the said support system (SS) is installed, and a rear part (PLR) dedicated to loading and situated at a level lower than or equal to the level of the said front support part (PLS).

2. The vehicle according to Claim 1, **characterized in that** the support system includes a structure (PS) intended to be secured fixedly to the said vehicle (V) behind a rear face (FAD) of the backrest (DS) of each seat (SI) and on which each first displacement means (MC1) is fixedly mounted.

3. The vehicle according to Claim 2, **characterized in that** the said structure (PS) includes a wall.

4. The vehicle according to one of Claims 2 and 3, **characterized in that** the said structure (PS) includes tubes.

5. The vehicle according to one of claims 2 to 4, **characterized in that** the said structure ((PS) is intended to be secured fixedly to pillars (ML) of the structure of the said vehicle (V).

6. The vehicle according to Claim 5, **characterized in that** the said structure (PS) is intended to be secured fixedly to opposite lateral pillars (ML) of the structure of the said vehicle (V).

7. The vehicle according to one of Claims 2 to 6, **characterized in that** the said structure (PS) is intended to be secured fixedly to the roof (T) of the said vehicle (V).

8. The vehicle according to one of Claims 2 to 7, **characterized in that** the said structure (PS) is intended to extend over the height of an upper part (PSH) of the said passenger compartment (H).

9. The vehicle according to one of Claims 1 to 8, **characterized in that** each seat pan (AS) is rotatably mounted with respect to the associated backrest (DS) and foldable against a front face (FVD) of the said backrest (DS).

10. The vehicle according to one of Claims 1 to 9, **characterized in that** each seat (SI) includes foldable feed (PR) secured to a lower face of its seat pan (AS) .

11. The vehicle according to one of Claims 1 to 10, **characterized in that** it includes drive means arranged to facilitate the displacement of a seat (SI) with respect to the one or more first associated displacement means (MC1).

12. The vehicle according to Claim 11, **characterized in that** the said drive means include at least one element selected from a group including at least one jack, a counterweight mechanism and a return spring.

13. The vehicle according to Claim 11, **characterized in that** the said drive means include an electric motor suited to cause the said seat (SI) to slide to order.

14. The vehicle according to one of the preceding claims, **characterized in that** the loading area defined beneath the seat (SI) extends also behind the seat (SI).

15. The vehicle according to one of the preceding claims, **characterized in that** the displacement of the said backrest (DS) and hence of the said seat (SI) upward is carried out by curvilinear translation.

16. The vehicle according to the preceding claim, **characterized in that** the displacement of the said backrest (DS) and hence of the said seat (SI) upward is carried out by means of two connecting links, one connected to the top of the backrest (DS) and the other connected to the bottom of the backrest (DS).

17. The vehicle according to one of the preceding claims, **characterized in that** it constitutes a motor vehicle of the utility type.

## Patentansprüche

1. Fahrzeug (V), **dadurch gekennzeichnet, dass** es mindestens ein Stützsystem (SS) für einen Innenraum (H) eines Fahrzeugs (V) aufweist, wobei das System (SS) mindestens einen Sitz (SI) aufweist, der eine Sitzfläche (AS), die fest mit einer Rückenlehne (DS) verbunden ist, aufweist, und ferner i) mindestens ein erstes Bewegungsmittel (MC1) aufweist, das dazu bestimmt ist, mit dem Fahrzeug (V) entlang einer ausgewählten Neigung in Bezug zu einer vertikalen Richtung des Fahrzeugs (V) fest verbunden zu werden, und ii) mindestens ein zweites Bewegungsmittel (MC2), das fest mit der Rückenlehne (DS) verbunden und eingerichtet ist, um sich in Bezug zu dem ersten Bewegungsmittel (MC1) derart zu bewegen, dass das Bewegen der Rückenlehne (DS) und daher des Sitzes (SI) von unten nach oben im Inneren des Fahrzeugs (V) erlaubt wird, um unter ihm (SI) einen Ladebereich zu definieren, und dass das Fahrzeug einen Fußboden (PL) aufweist, der einen vorderen Teil (PLS) aufweist, der dem Tragen eines oder mehrerer Sitze (SI) gewidmet ist und auf dessen Niveau das Stützsystem (SS) eingerichtet ist, und einen hinteren Teil (PLR), der der Ladung gewidmet ist und sich auf einem Niveau kleiner oder gleich dem Niveau des vorderen Stützteils (PLS) befindet.

2. Fahrzeug nach Anspruch 1, **dadurch gekennzeichnet, dass** das Stützsystem eine Struktur (PS) aufweist, die dazu bestimmt ist, fest mit dem Fahrzeug (V) hinter einer hinteren Seite (FAD) der Rückenlehne (DS) jedes Sitzes (SI) befestigt zu werden, und auf der stationär jedes erste Bewegungsmittel (MC1) montiert ist.

3. Fahrzeug nach Anspruch 2, **dadurch gekennzeichnet, dass** die Struktur (PS) eine Wand aufweist.

4. Fahrzeug nach einem der Ansprüche 2 und 3, **dadurch gekennzeichnet, dass** die Struktur (PS) Rohre aufweist.

5. Fahrzeug nach einem der Ansprüche 2 bis 4, **dadurch gekennzeichnet, dass** die Struktur (PS) dazu bestimmt ist, stationär an Ständern (ML) der Struktur des Fahrzeugs (V) befestigt zu werden.

6. Fahrzeug nach Anspruch 5, **dadurch gekennzeichnet, dass** die Struktur (PS) dazu bestimmt ist, fest mit gegenüberliegenden seitlichen Ständern (ML) des Fahrzeugs (V) verbunden zu werden.

7. Fahrzeug nach einem der Ansprüche 2 bis 6, **dadurch gekennzeichnet, dass** die Struktur (PS) dazu bestimmt ist, fest mit dem Dach (T) des Fahrzeugs (V) verbunden zu werden.

8. Fahrzeug nach einem der Ansprüche 2 bis 7, **dadurch gekennzeichnet, dass** die Struktur (PS) dazu bestimmt ist, sich auf der Höhe eines oberen Teils (PSH) des Innenraums (H) zu erstrecken.

9. Fahrzeug nach einem der Ansprüche 1 bis 8, **dadurch gekennzeichnet, dass** jede Sitzfläche (AS) in Bezug zu der dazugehörenden Rückenlehne (DS) drehend montiert ist und gegen eine Vorderseite (FVD) der Rückenlehne (DS) herunter geklappt werden kann.

10. Fahrzeug nach einem der Ansprüche 1 bis 9, **dadurch gekennzeichnet, dass** jeder Sitz (SI) umklappbare Füße (PR) aufweist, die mit einer unteren Seite seiner Sitzfläche (AS) fest verbunden sind.

11. Fahrzeug nach einem der Ansprüche 1 bis 10, **dadurch gekennzeichnet, dass** es Antriebsmittel aufweist, die eingerichtet sind, um das Bewegen eines Sitzes (SI) in Bezug zu dem/den dazugehörenden ersten Mittel(n) (MC1) zu erleichtern.

12. Fahrzeug nach Anspruch 11, **dadurch gekennzeichnet, dass** die Antriebsmittel mindestens ein Element aufweisen, das aus einer Gruppe ausgewählt ist, die mindestens einen Zylinder, einen Mechanismus mit Gegengewicht und eine Rückholfeder aufweist.

13. Fahrzeug nach Anspruch 11, **dadurch gekennzeichnet, dass** die Antriebsmittel einen Elektromotor aufweisen, der dazu geeignet ist, den Sitz (SI) auf Befehl zu schieben.

14. Fahrzeug nach einem der vorhergehenden Ansprüche, **dadurch gekennzeichnet, dass** sich der Ladebereich, der unter dem Sitz (SI) definiert ist, auch hinter dem Sitz (SI) erstreckt.

15. Fahrzeug nach einem der vorhergehenden Ansprüche, **dadurch gekennzeichnet, dass** das Bewegen der Rückenlehne (DS) und daher des Sitzes (SI) von unten nach oben durch kurvilineare Verschiebung erfolgt.

16. Fahrzeug nach dem vorhergehenden Anspruch, **dadurch gekennzeichnet, dass** die Bewegung der Rückenlehne (DS) und daher des Sitzes (SI) von unten nach oben mit Hilfe von zwei Schwingarmen erfolgt, von welchen einer oben an der der Rückenlehne (DS) und der andere unten an der Rückenlehne (DS) befestigt ist.

17. Fahrzeug nach einem der vorhergehenden Ansprüche, **dadurch gekennzeichnet, dass** es ein Kraftfahrzeug des Typs Nutzfahrzeug bildet.
